# EUROPÄISCHE PATENTSCHRIFT

(11) **EP 2 792 655 B1**
(45) Veröffentlichungstag und Bekanntmachung des Hinweises auf die Patenterteilung: **06.05.2015**
(21) Anmeldenummer: 13164347.0
(22) Anmeldetag: 18.04.2013
(51) Int. Cl.: C04B 35/00, C04B 41/00

(54) **Verschleißanzeige in einem Verbundsystem aus feuerfesten keramischen Steinen**
Wear indicator in a composite system of refractory ceramic bricks
Indicateur d'usure dans un système composite de briques réfractaires ceramiques.

(43) Veröffentlichungstag der Anmeldung: 22.10.2014
(73) Patentinhaber: Refractory Intellectual Property GmbH & Co. KG, 1100 Wien (AT)
(72) Erfinder: Klikovich, DI Michael, 2371 Hinterbrühl (AT); Bachmayer, DI Josse, 4813 Altmünster (AT); Zettl, DI Karl, 1100 Wien (AT); Maranitsch, Ing. Alexander, 1100 Wien (AT)
(74) Vertreter: Becker, Thomas

(56) Entgegenhaltungen:
- RU-C1- 2 243 267
- US-A- 5 421 561
- US-A- 5 478 053
- US-B1- 6 686 752

## Beschreibung

Die Erfindung betrifft eine Verschleißanzeige in einem Verbundsystem aus feuerfesten keramischen Steinen.

Feuerfeste keramische Steine werden seit Jahrzehnten zur Auskleidung von industriellen Hochtemperatur-Aggregaten, beispielsweise Öfen, eingesetzt. Der Stand der Technik und die Erfindung werden nachstehend anhand eines metallurgischen Schmelzgefäßes näher erläutert. Ein solches metallurgisches Schmelzgefäß, beispielsweise ein Tundish oder eine Pfanne (englisch: ladle) dienen der Aufnahme, Behandlung und Weiterleitung einer Metallschmelze. Das Gefäß selbst weist regelmäßig einen metallischen Mantel auf, der von der erwähnten Auskleidung aus feuerfesten keramischen Steinen zumindest im Boden- und Wandbereich geschützt wird.

Die feuerfesten keramischen Steine unterliegen einem thermischen, mechanischen und metallurgischen Verschleiß. Für die Sicherheit des Gefäßes ist es wichtig, dass die Schutzfunktion gegenüber dem Mantel zu einhundert Prozent erhalten bleibt, um die Gefahr eines unkontrollierten Schmelzeaustritts zu vermeiden.

Gleichzeitig versucht der Betreiber der Anlage, die feuerfeste Ausmauerung solange wie möglich zu erhalten, bevor sie repariert oder ausgetauscht werden muss, um Ausfallzeiten und Kosten möglichst gering zu halten.

Die Entscheidung, ob/wann repariert bzw. ob/wann ausgetauscht wird erfolgt auch heute noch weitestgehend visuell durch das Personal, das die Anlage betreut.

Es hat Versuche gegeben, den Verschleißzustand der Ausmauerung (der feuerfesten Steine) mithilfe von Messgeräten zu erfassen. Diese Messgeräte, die dann innerhalb der feuerfesten Auskleidung angeordnet werden müssen, sind meistens jedoch nicht ausreichend temperaturbeständig und außerdem teuer.

Der Erfindung liegt deshalb die Aufgabe zugrunde, eine Möglichkeit aufzuzeigen, den Verschleiß in einem Verbundsystem aus feuerfesten keramischen Steinen auf einfache Weise anzuzeigen.

Zur Lösung dieser Aufgabe geht die Erfindung von folgender Überlegung aus:

Die Verschleißanzeige muss innerhalb der zu überwachenden feuerfesten Auskleidung angeordnet werden. Aufgrund der hohen Temperaturen, die dort herrschen, muss die Verschleißanzeige aus einem entsprechend temperaturbeständigen Material bestehen. Die einfachste und effektivste Lösung dazu besteht darin, die Verschleißanzeige aus dem gleichen Material herzustellen, aus dem die feuerfeste Auskleidung besteht.

Eine Optimierung dieser Merkmale lässt sich erreichen, wenn die Verschleißanzeige Bestandteil der feuerfesten Ausmauerung ist, also selbst die Funktion der feuerfesten Auskleidung erfüllt.

Um die Funktion einer Verschleißanzeige zu erfüllen, müssen sich die Bauteile der Verschleißanzeige geometrisch von den sonstigen Steinen der Auskleidung unterscheiden. Dies muss nicht zwangsläufig die gesamte Geometrie des Bauteils betreffen. Dieser Gesichtspunkt ist vielmehr insoweit wesentlich, als die unterschiedliche Geometrie der Bauteile der Verschleißeinrichtung dann erkennbar sein muss, wenn der Verschleißzustand erreicht ist, bei dem eine Anzeige erfolgen soll.

Mit anderen Worten: Ein konventioneller Ausmauerungsstein einer Wand eines metallurgischen Gefäßes wird üblicherweise wie folgt definiert: Der Stein weist eine Heißseite auf, das ist die Seite, die der Metallschmelze benachbart ist, und eine Kaltseite, das ist die Seite, die dem äußeren Metallmantel des Gefäßes benachbart ist. Die Steinlänge (nachstehend vereinfacht: in Y-Richtung des Koordinatensystems) definiert den Abstand zwischen der Heißseite und der Kaltseite. Durch Verschleiß verringert sich dieser Abstand, in Y-Richtung, bis auf ein kritisches Maß (Verschleißmaß), das erkennbar sein soll.

Die Erfindungsidee besteht darin, spätestens mit Erreichen dieses kritischen Verschleißmaßes die Geometrie der Bauteile der Verschleißeinrichtung gegenüber der Geometrie der benachbarten regulären Steine der Ausmauerung deutlich unterscheidbar zu machen. Dies kann dann visuell durch das Bedienungspersonal erkannt werden, und zwar zuverlässig, weil die entsprechende Geometrieveränderung einem bestimmten Verschleißgrad entspricht.

In ihrer allgemeinsten Ausführungsform betrifft die Erfindung eine Verschleißanzeige in einem (für ein) Verbundsystem aus feuerfesten keramischen Steinen mit folgenden Merkmalen:
- die Verschleißanzeige besteht aus einem Set aus mindestens zwei feuerfesten keramischen Bauteilen,
- jedes Bauteil weist mindestens einen Flächenabschnitt mit einer dreidimensionalen Profilierung auf, wobei sich die Profilierungen von korrespondierenden Flächenabschnitten benachbarter Bauteile formschlüssig ergänzen,
- in Verschleißrichtung der Bauteile verlaufen die Profilierungen entweder nur über eine Teillänge, oder mit unterschiedlicher Geometrie oder nur über eine Teillänge und mit unterschiedlicher Geometrie.

Die Verschleißrichtung (Y) entspricht im Wesentlichen einer Richtung, die normal zur inneren Stirnseite der feuerfesten Auskleidung bzw. normal zur korrespondierenden Ofenwand verläuft.

Insbesondere bei metallurgischen Gefäßen, die eine im Wesentlichen zylinderförmige Ausmauerung aufweisen, bietet es sich an, mindestens ein Bauteil so auszuführen, dass es in dem Abschnitt, der verschleißt, eine kleinere Querschnittsfläche aufweist als in dem Abschnitt, der dem kalten Ende des Bauteils zugeordnet ist.

Eine Alternative besteht darin, die Orientierung des Bauteils zwischen dem heißen Ende und dem kalten Ende zu verändern, beispielsweise das Bauteil am heißen Ende mit einem im Wesentlichen in Z-Richtung orientierten Querschnitt auszubilden (also schmal in X-Richtung des Koordinatensystems und lang in Z-Richtung), während der Querschnitt am kalten Ende seine größte Erstreckung in X-Richtung besitzt. Dies kann beispielsweise dadurch erfolgen, dass der Abschnitt des Bauteils am kalten Ende in X-Richtung ein- oder beidseitig gegenüber dem Abschnitt des Bauteils vorsteht, der dem heißen Ende benachbart ist.

Diese Querschnittsveränderung, die einer Änderung der Profilierung entspricht, muss selbstverständlich so deutlich sein, dass das Bedienungspersonal die veränderte Geometrie ohne weiteres visuell erkennt.

Die erwähnten Profilierungen lassen sich in zwei Gruppen einteilen, nämlich gegenüber benachbarten Flächen vorspringende Profilierungen (englisch: male parts) und gegenüber benachbarten Flächen rückspringende Profilierungen (englisch: female parts).

Dabei sollten die durch die Profilierungen definierten Minimal- bzw. Maximalflächen mindestens 10%, besser mindestens 20% oder mindestens 30% unterschiedlich zu den in Y-Richtung davor oder dahinter liegenden Flächenabschnitten des Bauteils sein.

Die Profilierungen lassen sich in unterschiedlichen Geometrien ausbilden, beispielsweise Geometrien aus der Gruppe: Steg, Stufe, Dorn, Stift, Rippe, Pyramide, Sägezahn, Loch, Kanal, Nut, Prisma, Teilkreis, Ellipse.

Jede einzelne Profilierung kann so ausgebildet sein, dass sie sich in Verschleißrichtung (Y) in einer Richtung (X, Z) senkrecht zur Verschleißrichtung (Y) vergrößert. Beispielsweise bei einer stegartigen Profilierung, die in Y-Richtung verläuft, kann ein in Verschleißrichtung erster Abschnitt mit einer Querschnittsfläche a und ein daran anschließender Abschnitt mit einer Querschnittsfläche ausgebildet sein, die Fa entspricht, wobei F mindestens einen Wert von 1,1, besser 1,2 oder 1,3, bevorzugt aber einen Wert von mindestens 2 oder 3 oder 4 aufweisen kann.

Die umgekehrte Profilierung, die sich in Verschleißrichtung (Y) in einer Richtung (X, Z) senkrecht zur Verschleißrichtung (Y) verkleinert, ist ebenso möglich.

Mindestens eines der Bauteile kann seine Breite (in X-Richtung) in Verschleißrichtung (Y) verändern. Dies erfolgt dann insbesondere senkrecht zur Verschleißrichtung (Y). Dies kann unabhängig oder gleichzeitig mit der Ausbildung der Profilierung erfolgen.

Ebenso ist eine Ausführungsform möglich, bei der mindestens ein Bauteil seine Höhe (in Z-Richtung), senkrecht zur Verschleißrichtung (Y), in Verschleißrichtung (Y) verändert.

Jede dieser Veränderungen sollte wiederum mindestens 10%, besser mindestens 20% oder mindestens 30%, bevorzugt aber auch mindestens das zweifache, dreifache oder vierfache der Ausgangsgröße betragen.

Die Verschleißanzeige kann aus zwei Bauteilen, die zusammenwirken, bestehen, wobei im Prinzip nur ein Bauteil die gewünschte Verschleißanzeige bilden muss, während das andere Bauteil lediglich dazu dient, eine formschlüssige Verbindung zum anderen Bauteil zu schaffen, so dass sich das Set aus mindestens zwei Bauteilen in die feuerfeste Ausmauerung formschlüssig integrieren lässt.

Ein Set aus drei oder mehr Bauteilen ist ebenso möglich, wobei ein mittleres Bauteil von zwei baugleichen, spiegelbildlich angeordneten Bauteilen eingerahmt sein kann.

Die Bauteile können insbesondere vertikal übereinander oder horizontal nebeneinander angeordnet werden.

Die Erfindung betrifft neben der Verschleißanzeige auch ein industrielles Aggregat, das mit feuerfesten keramischen Steinen ausgekleidet ist und mindestens eine Verschleißanzeige der genannten Art aufweist.

Dabei können innerhalb eines Aggregates auch mehrere derartiger Verschleißanzeigen angeordnet werden, beispielsweise um unterschiedliche Verschleißzustände anzuzeigen.

Es ist bekannt, dass innerhalb eines metallurgischen Gefäßes verschiedene Bereiche der Ausmauerung einem unterschiedlich starken Verschleiß unterliegen. Es bietet sich dann an, in jeder dieser Verschleißzonen eine entsprechende Verschleißanzeige anzuordnen, die unabhängig von den anderen Verschleißanzeigen funktioniert. Insoweit umfasst das Aggregat mehrere Verschleißanzeigen unterschiedlicher Bauformen. Die unterschiedliche Bauform kann darin bestehen, dass die Profilierungen und/oder Querschnitte der Bauteile der Verschleißanzeige in Verschleißrichtung (Y-Richtung) an unterschiedlichen Stellen ausgebildet sind.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher erläutert. Dabei zeigen - jeweils in stark schematisierter Darstellung -
- Fig. 1:: eine dreiteilige Verschleißanzeige in perspektivischer ExplosionsDarstellung
- Fig. 2:: eine perspektivische Explosions-Ansicht einer zweiten Ausführungsform einer dreiteiligen Verschleißanzeige
- Fig. 3:: die Verschleißanzeige gemäß Figur 2 als Bestandteil einer feuerfesten keramischen Ausmauerung eines metallurgischen Gefäßes
- Fig. 4:: eine perspektivische Explosions-Ansicht einer zweiteiligen Verschleißanzeige.

In den Figuren sind gleiche oder gleichwirkende Elemente der Verschleißanzeige mit gleichen Bezugszeichen dargestellt.

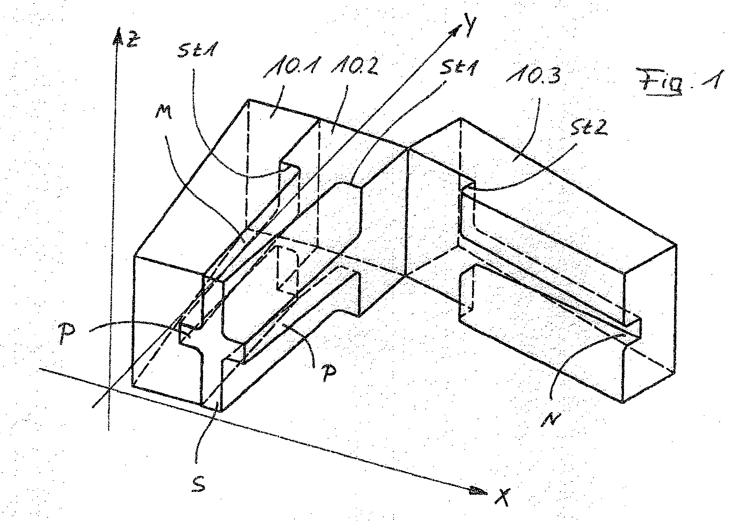

Figur 1 zeigt eine erfindungsgemäße Verschleißanzeige aus drei Bauteilen 10.1, 10.2, 10.3. Zur weiteren Erläuterung ist ein Koordinatenkreuz ergänzend eingezeichnet.

Das Bauteil 10.2 weist auf seiner Stirnseite S die Form eines Kreuzes auf. Von dem in Z-Richtung verlaufenden mittleren Abschnitt M verlaufen in X-Richtung rechts und links jeweils eine Profilierung P mit rechteckigem Querschnitt.

In Y-Richtung verbreitert sich der mittlere Abschnitt M konisch in Y-Richtung. Die stegartigen Profilierungen P bleiben in X-Richtung unverändert, verbreitern sich jedoch in Z-Richtung nach oben und unten konisch, und zwar jeweils bis zu einer Stufe St1, die das Bauteil 10.2 in Y-Richtung etwa im Verhältnis 2/3:1/3 unterteilt.

Der in Y-Richtung längere Abschnitt, der von der Stirnfläche S bis zur Stufe St1 verläuft, also an der Heißseite des Bauteils 10.2, bildet den Abschnitt des Bauteils 10.2, der verschleißen darf, während der kleinere, in X-Richtung breitere Abschnitt die Kaltseite des Bauteils 10.2 definiert und eine Mindest-Reststärke des Bauteils 10.2, (in Y-Richtung) beschreibt.

Die in Figur 1 links und rechts angeordneten Bauteile 10.1 und 10.3 sind mit ihren Seitenflächen, die dem Bauteil 10.2 zugeordnet sind, korrespondierend zum Bauteil 10.2 geformt, so dass die Bauteile 10.1, 10.2 und 10.2, 10.3 formschlüssig aneinandergefügt werden können. Für die Bauteile 10.1 und 10.2 ist dies dargestellt, während die Bauteile 10.2 und 10.3 "auseinandergeklappt" dargestellt sind, um die jeweils korrespondierenden Profilierungen deutlicher zu machen. Beispielsweise weist das Bauteil 10.3 korrespondierend zur Profilierung P des Bauteils 10.2 eine Nut N auf sowie eine zur Stufe St1 analoge Stufe St2.

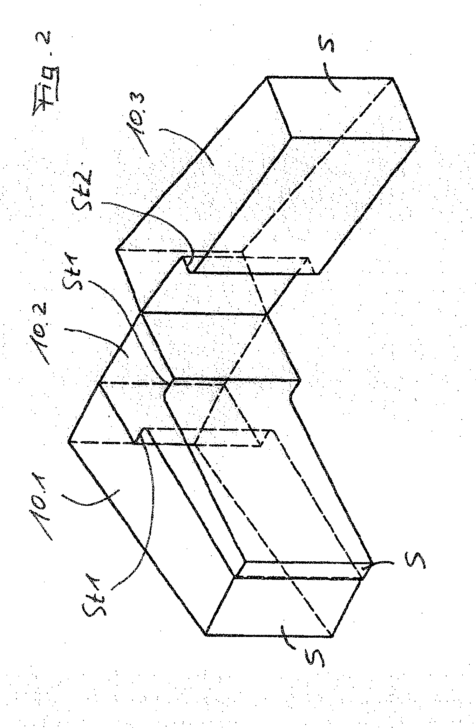

Die Ausführungsform nach Figur 2 unterscheidet sich von der Ausführungsform gemäß Figur 1 lediglich darin, dass die stegartigen Profilierungen P am Bauteil 10.2 und entsprechend die Nuten N an den Bauteilen 10.1 und 10.3 fehlen. Ansonsten sind Aufbau und Funktion der Verschleißanzeige identisch.

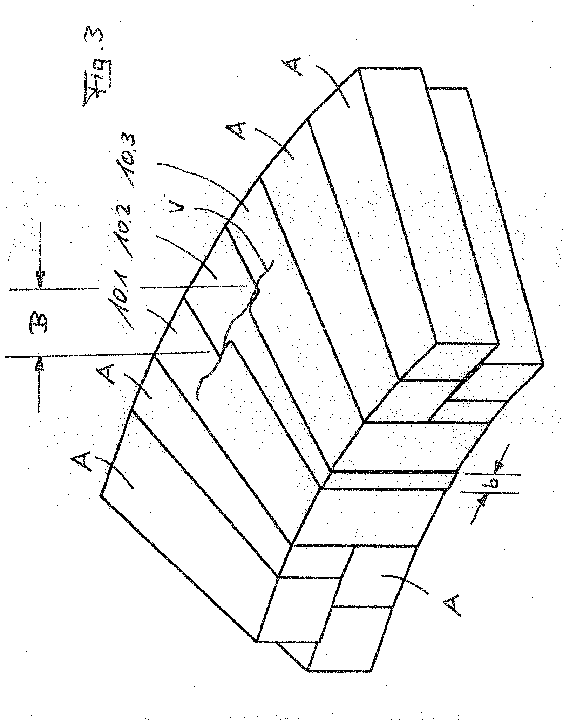

Das Set aus den Bauteilen 10.1, 10.2 und 10.3 kann einen Bestandteil einer feuerfesten Ausmauerung eines metallurgischen Gefäßes bilden, die anhand einer Teilansicht einer wandseitigen Ausmauerung einer Pfanne in Figur 3 dargestellt ist. Links neben dem Bauteil 10.1 sind konventionelle Ausmauerungssteine A ebenso zu erkennen wie rechts des Bauteils 10.3. Dabei ist zu erkennen, dass die Bauteile 10.1, 10.2, 10.3 doppelt so hoch sind (vertikal, in 7-Richtung des Koordinaten-Systems) wie die benachbarten Steine A der Ausmauerung. Es ist grundsätzlich möglich, dass die Bauteile (wie 10.1, 10.2, 10.3) eine Höhe oder Breite haben, die ein Vielfaches, insbesondere ein ganzzahliges Vielfaches der Höhe oder Breite der normalen Ausmauerungssteine ist.

Ist die Ausmauerung bis zu der als Wellenlinie V markierten Verschleißzone verbraucht (verschlissen), so ist dies für das Bedienungspersonal problemlos zu erkennen, weil sich die Breite (in X-Richtung) b am heißen Ende des Bauteils 10.2 auf eine Breite B am kalten Ende des Bauteils 10.2 vergrößert.

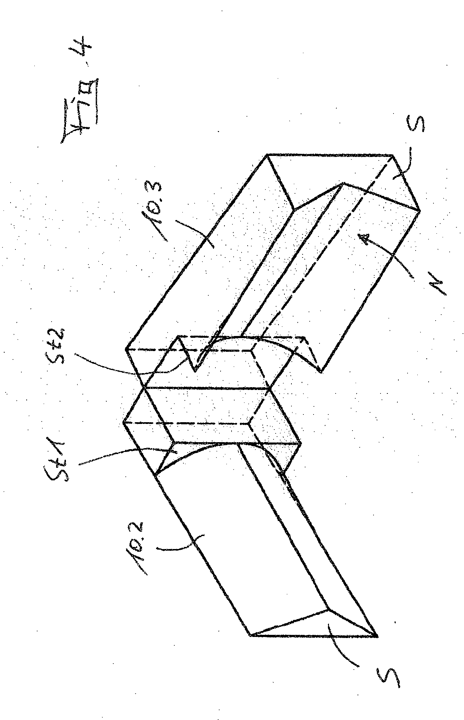

Beim Ausführungsbeispiel nach Figur 4 ist der Verschleißteil des Bauteils 10.2 von der Stirnseite S bis zum Bereich der Stufe St1 anders gestaltet, und zwar - in einem Vertikalschnitt - dreieckförmig, so dass sich insgesamt die Geometrie eines Prismas für diesen Abschnitt ergibt, an den sich am kalten Teil des Bauteils 10.2 ein Abschnitt mit Rechteckquerschnitt anschließt.

Das Erreichen der vorbestimmten Verschleißgrenze lässt sich wiederum optisch erkennen, wenn der Verschleißstein 10.2 seine Geometrie von dreieckförmig auf rechteckig ändert.

Bei dieser Verschleißanzeige genügt ein weiterer Stein für das Verschleißset, der wiederum mit 10.3 bezeichnet ist und dessen Geometrie korrespondierend zur Geometrie des Bauteils 10.2 ausgeführt ist, und zwar mit einer gegenüber der Nut N gemäß Figur 1 sehr viel größeren N, die als Rinne mit dreieckförmigen Querschnitt gestaltet ist.

## Patentansprüche

1. Verschleißanzeige in einem Verbundsystem aus feuerfesten keramischen Steinen (A) mit folgenden Merkmalen:
a) die Verschleißanzeige besteht aus einem Set aus mindestens zwei feuerfesten keramischen Bauteilen (10.1, 10.2, 10.3),
b) jedes Bauteil (10.1, 10.2, 10.3) weist mindestens einen Flächenabschnitt mit einer dreidimensionalen Profilierung (P, N) auf, wobei sich die Profilierungen (P, N) von korrespondierenden Flächenabschnitten benachbarter Bauteile (10.1, 10.2, 10.2,10.3) formschlüssig ergänzen,
c) in Verschleißrichtung (Y) der Bauteile (10.1, 10.2, 10.3) verlaufen die Profilierungen (P, N)
c1) nur über eine Teillänge, oder
c2) mit unterschiedlicher Geometrie, oder
c3) nur über eine Teillänge und mit unterschiedlicher Geometrie.

2. Verschleißanzeige nach Anspruch 1 mit mindestens einer Profilierung (P, N) aus der Gruppe: Steg, Stufe, Dorn, Stift, Rippe, Pyramide, Sägezahn, Loch, Kanal, Nut, Prisma, Ellipse, Teilkreis.

3. Verschleißanzeige nach Anspruch 1 mit mindestens einer Profilierung (P, N), die sich in Verschleißrichtung (Y) in einer Richtung (X,Z) senkrecht zur Verschleißrichtung (Y) vergrößert.

4. Verschleißanzeige nach Anspruch 1 mit mindestens einer Profilierung (P, N), die sich in Verschleißrichtung (Y) in einer Richtung (X,Z) senkrecht zur Verschleißrichtung (Y) verkleinert.

5. Verschleißanzeige nach Anspruch 1, bei der mindestens ein Bauteil (10.1, 10.2, 10.3) seine Breite (B), senkrecht zur Verschleißrichtung (Y), in Verschleißrichtung (Y) verändert.

6. Verschleißanzeige nach Anspruch 1, bei der mindestens ein Bauteil seine Höhe, senkrecht zur Verschleißrichtung (Y), in Verschleißrichtung (Y) verändert.

7. Verschleißanzeige nach Anspruch 1 mit einem Set aus drei Bauteilen (10.1, 10.2, 10.3).

8. Mit feuerfesten keramischen Steinen ausgekleidetes industrielles Aggregat, **gekennzeichnet durch** mindestens eine Verschleißanzeige nach Anspruch 1.

9. Aggregat nach Anspruch 8 mit mehreren Verschleißanzeigen unterschiedlicher Bauform.

## Claims

1. Wear indicator in a compound system made of fireproof ceramic bricks (A) with the following characteristics:
a.) the wear indicator consists of a set of at least two ceramic components (10.1, 10.2, 10.3),
b.) each component (10.1, 10.2, 10.3) features at least one surface segment with a three dimensional profile (P, N), wherein the profiles (P, N) of corresponding surface segments of adjacent components (10.1, 10.2, 10.3) complement one another in a form fitted manner,
c.) in the direction of wear (Y) of the components (10.1, 10.2, 10.3), the profiles (P, N) extend
c1.) only over a partial length, or
c2.) with a different geometry, or
c3.) only over a partial length with a different geometry.

2. Wear indicator according to claim 1 with at least one profile (P, N) from the group: bar, step, spike, bolt, pin, rib, pyramid, sawtooth, hole, channel, groove, prism, ellipse, pitch circle.

3. Wear indicator according to claim 1 with at least one profile (P, N) which, in the direct of wear (Y), enlarges in a direction (X, Z) perpendicular to the direction of wear (Y).

4. Wear indicator according to claim 1 with at least one profile (P, N) which, in the direct of wear (Y), downsizes in a direction (X, Z) perpendicular to the direction of wear (Y).

5. Wear indicator according to claim 1 wherein at least one component (10.1, 10.2, 10.3) changes its width (B), perpendicular to the direction of wear (Y), in the direction of wear (Y).

6. Wear indicator according to claim 1 wherein at least one component changes its height, perpendicular to the direction of wear (Y), in the direction of wear (Y).

7. Wear indicator according to claim 1 with a set of three components (10.1, 10.2, 10.3).

8. Industrial aggregate lined with fireproof ceramic bricks, **characterized by** at least one wear indicator according to claim 1.

9. Aggregate according to claim 8 with multiple wear indicators of different shape.

## Revendications

1. Témoin d'usure dans un système combiné de pierres céramique réfractaire (A) présentant les caractéristiques suivantes :
a) le témoin d'usure est composé d'un set d'au moins deux pièces céramique réfractaire (10.1, 10.2, 10.3),
b) chaque pièce (10.1, 10.2, 10.3) présente au moins un tronçon de surface avec un profilé tridimensionnel (P, N), sachant que les profilés (P, N) de tronçons de surface correspondants de pièces (10.1, 10.2 ; 10.2, 10.3) voisines se complètent par complémentarité de forme,
c) les profilés (P, N) passent dans le sens d'usure (Y) des pièces (10.1, 10.2, 10.3)
c1) uniquement sur une longueur partielle, ou
c2) avec une géométrie différente, ou
c3) uniquement sur une longueur partielle et avec une géométrie différente.

2. Témoin d'usure selon la revendication 1, comprenant au moins un profilé (P, N) du groupe : traverse, étage, poinçon, tige, nervure, pyramide, dent de scie, trou, canal, rainure, prisme, ellipse, cercle partiel.

3. Témoin d'usure selon la revendication 1, comprenant au moins un profilé (P, N) qui s'élargit dans le sens d'usure (Y) dans un sens (X, Z) perpendiculaire au sens d'usure (Y).

4. Témoin d'usure selon la revendication 1, comprenant au moins un profilé (P, N) qui réduit dans le sens d'usure (Y) dans un sens (X, Z) perpendiculaire au sens d'usure (Y).

5. Témoin d'usure selon la revendication 1, dans lequel au moins une pièce (10.1, 10.2, 10.3) modifie sa largeur (B) dans le sens d'usure (Y), perpendiculaire au sens d'usure (Y).

6. Témoin d'usure selon la revendication 1, dans lequel au moins une pièce modifie sa hauteur dans le sens d'usure (Y), perpendiculaire au sens d'usure (Y).

7. Témoin d'usure selon la revendication 1, comprenant un set de trois pièces (10.1, 10.2, 10.3).

8. Installation industriel revêtu de pierres céramique réfractaire, **caractérisé par** au moins un témoin d'usure selon la revendication 1.

9. Groupe selon la revendication 8 comprenant plusieurs témoins d'usure de différente forme de construction.
